(19) Europäisches Patentamt
European Patent Office
Office européen des brevets

(11) **EP 2 612 701 B1**

(12) **EUROPEAN PATENT SPECIFICATION**

(45) Date of publication and mention
of the grant of the patent:
**22.02.2017 Bulletin 2017/08**

(51) Int Cl.:
***B01D 63/16*** *(2006.01)*      ***B01D 33/21*** *(2006.01)*
***C02F 3/12*** *(2006.01)*

(21) Application number: **12000117.7**

(22) Date of filing: **09.01.2012**

(54) **Rotating membrane filter disc apparatus**

Rotationsmembranfiltervorrichtung

Appareil de filtration a membrane rotatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.07.2013 Bulletin 2013/28**

(73) Proprietor: **Grundfos BioBooster A/S**
**8850 Bjerringbro (DK)**

(72) Inventors:
• **Madsen, Steffen**
**8950 Ørsted (DK)**

• **Bin, Yuan**
**Suzhou**
**Jiangsu Province (CN)**

(74) Representative: **Patentanwälte Vollmann & Hemmer**
**Wallstraße 33a**
**23560 Lübeck (DE)**

(56) References cited:
**EP-A1- 1 854 530       WO-A1-01/80970**
**WO-A1-2004/089519    JP-A- 62 279 807**
**US-A1- 2011 036 767**

## Description

The present invention generally relates to a filtration apparatus. The present invention more particularly relates to a pressurised filtration apparatus using ultra filtration membranes to filter activated sludge.

A membrane bioreactor (MBR) combines a membrane process with a suspended growth bioreactor. The membrane process may, by way of example, be microfiltration or ultra filtration. MBR technologies are widely used for industrial and municipal wastewater treatment.

When MBR techniques are used for filtration of sludge, fouling of the membranes is a major challenge. Fouling of the membranes will reduce the filtration capacity and thus slow down the process time and increase the cost.

A common way of reducing fouling of the membranes is to use cross flow filtration where a flow across the filter surface is used to reduce and, at least partly, tear off the fouling layer. Hereby it will become possible to maintain a higher permeate flow.

The cross flow depends on the velocity relative to the membrane surface and the cross flow influences the shear stress on the membrane.

The strain rate, $\gamma$, also called the velocity gradient perpendicular to the direction of shear is defined as the ratio between velocity change and distance between adjacent layers of different velocities:

$$(1) \qquad \gamma = dv/dy$$

The shear stress, T, is the product between viscosity, $\eta$, and strain rate, $\gamma$, and is given by:

$$(2) \qquad \tau = \eta \cdot \gamma$$

Viscosity is almost constant for a Newtonian fluid like water, but for a non-Newtonian fluid like sludge, the viscosity is decreasing for increasing strain rates.

Establishment of a higher cross flow can be provided by introducing significant obstruction elements outside the rotating membrane disc for creating turbulences and shear. A higher cross flow can also be introduced by arranging rotating shear generating elements between the stationary membrane discs. Both the obstruction elements and the rotating shear generating elements are associated with a more complex construction.

Accordingly, there is need for a simple way of generating a higher cross flow and hereby shear on a membrane surface.

US 2011/036767 A1 discloses a water processor having embodiments with filter discs on a rotating shaft arranged co-axially in a cylindrical pressure vessel.

EP 1 854 530 A1 discloses a filtration system having rotating filter disks. In this arrangement there are provided blades on the filter disk for moving the fluid. WO 01/80970 A1 discloses an arrangement of two or more shafts with rotating disks overlapping one another to achieve a cleaning effect. The arrangement of two or more rotating shafts results in a complex construction.

It is an object for the present invention to specify a filtration apparatus that provides a higher cross flow and shear on a membrane surface.

This object can be achieved by a filtration apparatus having the features defined in claim 1. Improved embodiments are disclosed in the sub claims, the following description and the drawings.

The filtration apparatus according to the invention comprises the features of claim 1. The apparatus comprises:

- a pressurised cylindrical pressure vessel having a longitudinal axis;
- a shaft having a longitudinal axis extending parallel to the longitudinal axis of the pressure vessel;
- a plurality of rotatable membrane filter discs arranged along the length of the shaft, where the membrane filter discs are spaced from each other attached to the shaft and oriented transverse to the longitudinal axis of the shaft and where the interior of the membrane filter discs are in fluid communication with a permeate discharge channel. This channel is extending parallel to the longitudinal axis of the pressure vessel, where the pressure vessel has a cylindrical inner geometry without any significant obstruction elements. The longitudinal axis of the pressure vessel is laterally offset from the longitudinal axis of the shaft and/or that the membrane filter discs are oval-shaped.

Hereby higher shear can be achieved and thus fouling of the membranes can be reduced so that a higher permeate flow can be maintained. The eccentric position of the discs relative to the vessel or the oval shape of the discs generates a flow pattern that in some areas will be directed against the rotation direction of the disc so that high shear can be achieved. More specifically it has been found, that shifting the longitudinally extending axis of the discs away from the longitudinally extending axis of the vessel , or by making the discs oval in shape, generates a multiple of swirls in the wastewater. Each of these swirls rotates clockwise or counter clockwise and essentially stay in their position in the waste water once they have been generated. When a disc is moved through these swirls they act abrasively on the surface of the disc.

By the term pressurised is meant that the pressure in the pressure vessel exceeds the pressure from the surroundings. It is preferred that the pressure in the vessel is 1-4 bars above the pressure from the surroundings. An increased pressure in the pressure vessel will cause an enhanced aeration and thus enable treatment of a larger volume fluid pertime unit.

The membrane filter discs may be made in any suitable material e.g. ceramics, metal, or polymer.

It may be an advantage that the membrane filter discs are basically oval or circular.

By having oval-shaped membrane filter discs higher shear can be achieved due to the flow patterns introduced by the oval-shaped membrane filter discs.

The oval-shaped membrane filter discs may be arranged in different ways along the length of the shaft. All the membrane filter discs may be oriented in the same way, however, it is possible to arrange the filter discs so that every second disc is arranged in one way and that adjacent discs are angular displaced (e.g. 90 degrees) relative to one another.

When adjacent discs are angularly displaced (e.g. 90 degrees) relative to each other, it is possible to arrange the discs closer to one another and still be able to operate the filtration system, even though the sludge that is drained along the radius of the filtration discs is being concentrated along its way along the radius of the filtration discs. There may be space enough for the sludge to escape from the intermediate space between adjacent filter discs because all adjacent oval filter discs are angularly displaced.

The longitudinal axis of the pressure vessel is laterally offset from the longitudinal axis of the shaft with a distance corresponding to 2-20%, preferable 5-10% of the inner diameter of the pressure vessel. By having an eccentricity corresponding to 2-20%, preferable 5-10% of the inner diameter of the pressure vessel an effective shear distribution is achieved along the discs so that fouling of the membranes can be significantly reduced.

It may be an advantage that the shaft comprises a plurality of interconnected shaft portions, that the shaft extends along the length of the pressure vessel and that the shaft is mechanically connected to a drive unit.

In this way it is possible to build filtration apparatuses of various lengths by selecting, interconnecting, and arranging a suitable number of shaft portions along the entire length of the pressure vessel and connect the shafts to a drive unit. Besides it is possible to build the filtration apparatus from filter modules each rotable mounted to a shaft portion.

Preferably the drive unit is an electronic motor that may be equipped with a frequency converter for changing the rotational speed of the shaft. A good shear effect has been found in the range of 100 to 250 RPM, preferably between 140 and 200 RPM.

The shortest distance, $D_1$, between the membrane filter discs and the inner side of the pressure vessel is less than half the longest distance, $D_2$, between the membrane filter discs and the inner side of the pressure vessel so that $D_1 < \frac{1}{2}D_2$. By reducing $D_1$ and increasing $D_2$ the highest possible eccentricity can be achieved in order to generate the highest possible shear.

It is preferred that one or more porous aeration pipes extending basically parallel to the longitudinal axis of the pressure vessel are arranged on the inner side of the pressure vessel.

The porous aeration pipes are pipes provided with holes, through which air or gas can be delivered to the fluid being filtered. Porous aeration pipes arranged on the inner side of the pressure vessel makes it easier to dissolve oxygen containing gas into the fluid.

It may be beneficial that the filtration apparatus comprises a plurality of membrane filter disc modules each consisting of a stack of membrane filter discs, and that a bearing is provided at the connection area of each set of adjacent membrane filter disc modules.

Use of membrane filter disc modules consisting of a stack of membrane filter discs makes it possible to build filtration apparatuses of different lengths. Thus, it is possible to meet specific customer demands. Furthermore, replacement of filter discs can be eased. It is an advantage that a bearing is provided at the connection area of each set of adjacent membrane filter disc modules, because this makes it easier to build and assemble the filtration apparatus. By the term connection area is meant the area located between sets of adjacent membrane filter disc modules. Adjacent membrane filter disc modules is neighbouring filter disc modules.

It is preferred that the membrane filter disc modules are arranged in a chassis part extending along the length of the pressure vessel. Hereby it is possible to arrange all membrane filter disc modules at a chassis part and hereafter arrange the chassis part and the membrane filter disc modules as one unit in the vessel.

It may be an advantage that each filter disc is arranged in such a way that the filter discs are arranged in such a way that a line L that intersects a first filter disc point $P_1$ that has the shortest distance, $D_1$, to the inner side of the pressure vessel and that said line intersects a second filter disc point $P_2$ that has the longest distance, $D_2$, to the inner side of the pressure vessel. The line L then defines:

- a first 180 degree angular area comprising:

  1) a first 90 degree angular area $A_1$ abutting the first point $P_1$ and
  2) and a second angular area $A_2$ abutting first 90 degree angular area $A_1$ and being present at the same side of the line L as first 90 degree angular area $A_1$,

- a second 180 degree angular area comprising:

  3) a third 90 degree angular area $A_3$ abutting the second 90 degree angular area $A_2$ and being present at the opposite side of the line L as the second 90 degree angular area $A_2$ and
  4) and a fourth degree angular area $A_4$ extending between the third 90 degree angular area $A_3$ and the first 90 degree angular area $A_1$,

  where one or more porous aeration pipes extend in the third 90 degree angular area $A_3$.

In this way it is possible to achieve high shear at the presence of the porous aeration pipes. When the aeration pipes are located in the third 90 degree angular area optimum conditions are present for allowing air bubbles, released from the aeration pipes, to be dissolved in the fluid. The air bubbles will have the longest possible retention time in the fluid when the aeration pipes are located in the third 90 degree angular area.

It is preferred that no porous aeration pipes extend in the first 90 degree angular area or in the second 90 degree angular area because this will make it possible to achieve the highest possible shear.

It may be beneficial that the pressure vessel is configured to function as a membrane bioreactor (MBR) and that one or more porous aeration pipes, extending basically parallel to the longitudinal axis of the pressure vessel arranged on the inner side of the pressure vessel are configured to aerate a fluid contained in the pressure vessel. Hereby it is possible to use the vessel as a biological reactor and filtration unit at the same time.

It is preferred that the porous aeration pipes are configured to release air bubbles in a size range of 2-40 $\mu$m, preferable 5-10 $\mu$m. Such aeration pipes provide air bubbles that can easily be dissolved in the fluid and hereby be utilised by aerobic bacteria.

Preferred embodiments of the present invention will now be more particularly described, by way of example, with reference to the accompanying drawing, wherein:

Fig. 1    shows a perspective view of a filtration apparatus according to the invention;

Fig. 2    shows a cross-sectional view a part of a filtration apparatus according to the invention;

Fig. 3    shows another cross-sectional view of a filtration apparatus according to the invention;

Fig. 4    shows a schematic view of a waste water treatment system with a filtration apparatus according to the invention, and

Fig. 5    shows a schematic view of the shear stress distribution on a filtration membrane in a filtration apparatus according to the invention.

Other objects and further scope of applicability of the present invention will become apparent from the detailed description given hereinafter.

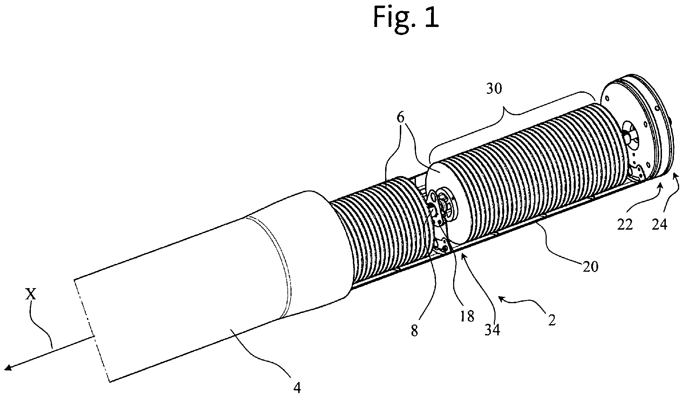

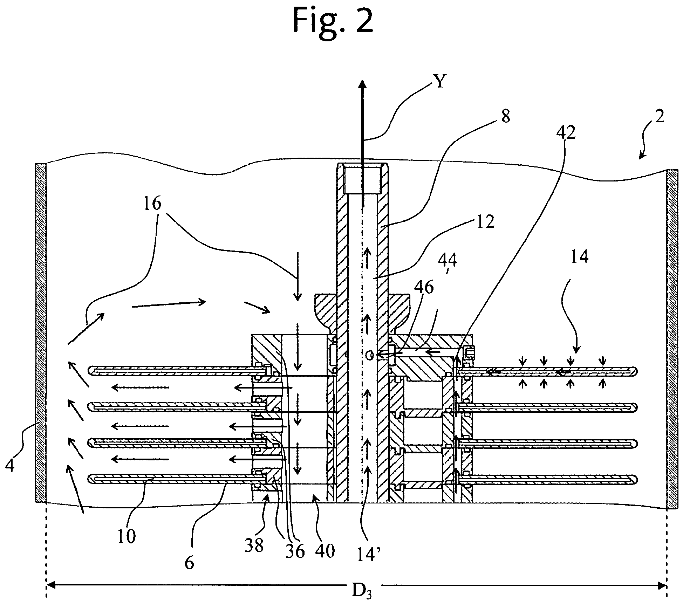

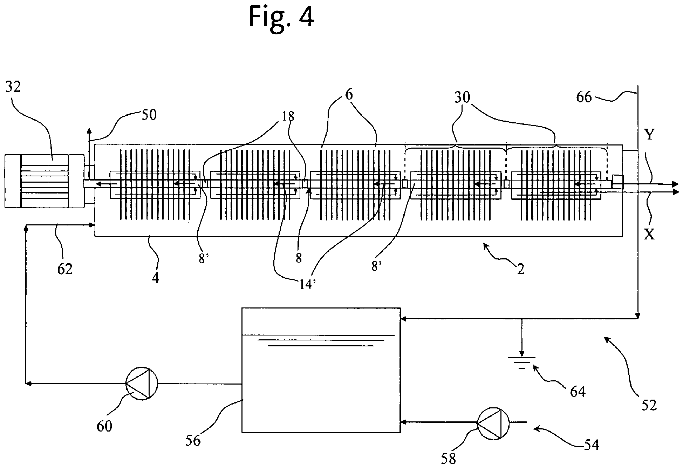

Fig. 1 illustrates a filtration device 2 comprising a pressurised cylindrical pressure vessel 4 having a longitudinal axis X. Inside the vessel 4 a shaft extends parallel to the longitudinal axis X of the pressure vessel 4 and a plurality of rotatable membrane filter discs 6 are arranged along the length of the shaft 8. The membrane filter discs 6 are basically evenly spaced from each other and they are attached to the shaft 8 and oriented transverse to the longitudinal axis (Y see Fig. 2) of the shaft 8 that is mechanically connected to a drive unit (32 see Fig. 4).

The filtration device 2 comprises several modules 30 each comprising a stack of membrane filter discs 6. The modules 30 are arranged in a chassis part 20 that extends along the length of the pressure vessel 4. A bearing 18 is provided at the connection area 34 of each set of adjacent membrane filter disc modules 30. The bearing 18 is attached to the shaft 8. At the distal end of the shaft 8 an end flange 24 with a sludge inlet 22 is provided. The end flange 24 with the sludge inlet 22 can be fixed to the chassis part 20.

The shaft 8 comprises a number of interconnected shaft portions and it is preferred that each membrane filter disc module 30 has its own shaft portion.

The vessel 4 is a pressurised cylindrical pressure vessel 4 that can be made in plastic material or any other suitable material. The required thickness of the vessel 4 may be determined on the basis of the specific pressure requirements.

When the filtration apparatus 2 is made out of a number of membrane filter disc modules 30 each having their own shaft portion, there is huge design freedom to build a filtration apparatus 2. It is possible to build filtration apparatuses 2 of various lengths by changing the number of membrane filter disc modules 30 and shaft portions.

The membrane filter discs 6 can be mounted on a shaft portion to constitute a first membrane filter disc module 30 that can be connected to the chassis part 20. Hereafter another membrane filter disc module 30 can be connected to the first membrane filter disc module 30 and to the chassis part 20. When the desired number of membrane filter disc modules 30, are connected to the chassis part 20, the chassis part 20 can be inserted into the vessel 4.

During service, the chassis part 20 with the membrane filter disc modules 30 can be pulled out of the vessel 4 and service can be carried out. It is, by way of example, possible to replace a whole membrane filter disc module 30 or disassemble a membrane filter disc module 30 in order to replace one or more membrane filter discs 6.

Fig. 2 illustrates a cross-sectional view of a filtration apparatus according to the invention. A plurality of membrane filter discs 6 are fixed to a hub member 38 comprising a plurality of mechanically connected hub segments 36.

The membrane filter discs 6 are arranged along the length of a hollow shaft 8. The membrane filter discs 6 are spaced apart from each other. The interior 10 of the membrane filter discs 6 are in fluid communication with a permeate discharge channel 12 extending parallel to the longitudinal axis of the pressure vessel 4. The pressure vessel 4 has a cylindrical cross-sectional geometry and does not have any significant obstruction elements.

The membrane filter discs 6 are capable of filtering fluid. The fluid that enters the membrane of the membrane filter discs 6 flows towards the shaft 8. This is indicated by arrows representing the permeate flow 14. The permeate hereafter flows along a channel 42 extending parallel to the shaft 8. The fluid enters the permeate discharge channel 12 in the shaft 8 via a radial channel 44 through a bore in the shaft 8. The permeate flows towards the permeate outlet 50 (see. Fig. 4).

The rotation of the membrane filter discs 6 generates a sludge flow 16. The sludge flows along the channel 40 in the hub member 38 and flows hereafter outwards in a direction basically parallel to the surface of the membrane filter discs 6. Hereby the rotation of the membrane filter discs 6 generates a flow that ensures a continuous mixing of the sludge.

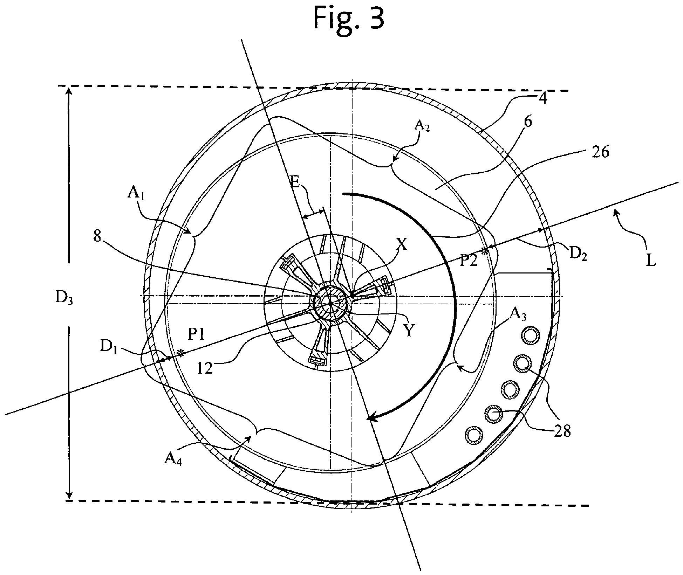

Fig. 3 illustrates a cross-sectional view of a filtration apparatus according to the invention. A membrane filter disc 6 is attached concentrically to a shaft 8 arranged in a cylindrical pressure vessel 4. The pressure vessel 4 has a longitudinal and concentric axis X.

The longitudinal axis X of the pressure vessel 4 is laterally offset from the longitudinal axis Y of the shaft 8 with a distance E corresponding to less than 10% of the inner diameter $D_3$ of the pressure vessel 4. The eccentricity E is indicated as the distance between the longitudinal axis X of the pressure vessel 4 and the longitudinal axis Y of the shaft 8.

Due to the fact that the longitudinal axis X of the pressure vessel 4 is laterally offset from the longitudinal axis Y of the shaft 8 the membrane filter disc 6 is will generate an increased flow across the filter surface. Accordingly, fouling of the membrane can be reduced and preferably the increased cross flow can at least partly, tear off the fouling layer so that a higher permeate flow can be maintained.

The shortest distance $D_1$, between the membrane filter disc 6 and the inner side of the pressure vessel 4 is less than half the longest distance, $D_2$, between the membrane filter disc 6 and the inner side of the pressure vessel 4.

The shaft 8 is hollow and comprises the permeate discharge channel 12. The direction of rotation 26 is indicated with an arrow. Five porous aeration pipes 28 are arranged close to the inner side of the pressure vessel 4. The porous aeration pipes 28 extend basically parallel to the longitudinal axis X of the pressure vessel 4.

The porous aeration pipes 28 are pipes provided with holes that are configured in such a way that air or gas can be delivered to the fluid through these holes. Accordingly, the porous aeration pipes make it easier to dissolve oxygen containing gas into the fluid.

The filter disc 6 has a first filter disc point $P_1$ that has the shortest distance, $D_1$, to the inner side of the pressure vessel 4. The filter disc 6 also has a second filter disc point $P_2$ that has the longest distance, $D_2$, to the inner side of the pressure vessel 4. The filter disc 6 is arranged in such a way that the line L that intersects the first filter disc point $P_1$ and the second filter disc point $P_2$, divides the filter disc 6 into a first 180 degree angular area and a second 180 degree angular area.

The first 180 degree angular area comprises a first 90 degree angular area $A_1$ abutting the first point $P_1$. The first 180 degree angular area also comprises a second angular area $A_2$ being present at the same side of the line L as first 90 degree angular area $A_1$ and abutting the first 90 degree angular area $A_1$.

The second 180 degree angular area comprises a third 90 degree angular area $A_3$ being present at the opposite side of the line L and abutting the second 90 degree angular area $A_2$. The second 180 degree angular area moreover comprises a fourth 90 degree angular area $A_4$ extending between the third 90 degree angular area $A_3$ and the first 90 degree angular area $A_1$.

Five porous aeration pipes 28 extend in the third 90 degree angular area $A_3$. The aeration pipes 28 are configured to aerate the fluid in the pressure vessel 4. Accordingly, the pressure vessel 4 is capable of being used as a MBR.

The porous aeration pipes 28 are configured to release small-sized air bobbles to the fluid in the pressure vessel 6.

Fig. 4 illustrates a schematic view of a wastewater treatment system 52 with a filtration apparatus 2 according to the invention. The waste water treatment system 52 comprises a waste water inlet 54 in fluid communication with a biological process tank 56. The wastewater is pumped into the biological process tank by a pump 58. In the biological process tank 56 the waste water may be treated by known biological processes to remove biological contaminants.

The treated waste water is pumped from the biological process tank 56 to the filtration apparatus 2 via a pressurised sludge recirculation inlet 62 by use of a pump 60. A sludge recirculation outlet 66 is provided at the distal end of a pressurised cylindrical pressure vessel 4 of the filtration apparatus 2. An excess sludge outlet 64 is arranged between the filtration apparatus 2 and the biological process tank 56. A portion of the sludge is pumped back in the biological process tank 56 while another portion of the sludge may be collected in a sludge reservoir (not shown).

The sludge is being re-circulated in the pressure vessel 4 of the filtration apparatus 2. A plurality of membrane filter discs 6 are arranged in the pressure vessel. The membrane filter discs 6 are spaced from each other and are arranged along the length of a shaft 8. The shaft comprises a plurality of interconnected shaft portions 8'. The shaft 8 extends along the length of the pressure vessel 4 and is mechanically connected to a drive unit 32 formed as a motor. A number of membrane filter disc modules 30 are provided in the pressure vessel 4.

A bearing 18 is provided at the connection area of each set of adjacent membrane filter disc modules.

The permeate is discharged at the permeate outlet 50 located at the proximal end of the filtration apparatus 2 and the permeate flow 14' through the permeate discharge channel in the shaft 8 is indicated in Fig. 4.

The longitudinal axis X of the pressure vessel

4 is laterally offset from the longitudinal axis Y of the shaft 8. Accordingly, when the membrane filter discs 6 are rotated a high cross flow is generated and thus fouling of the membranes can be reduced so that a higher permeate flow can be maintained.

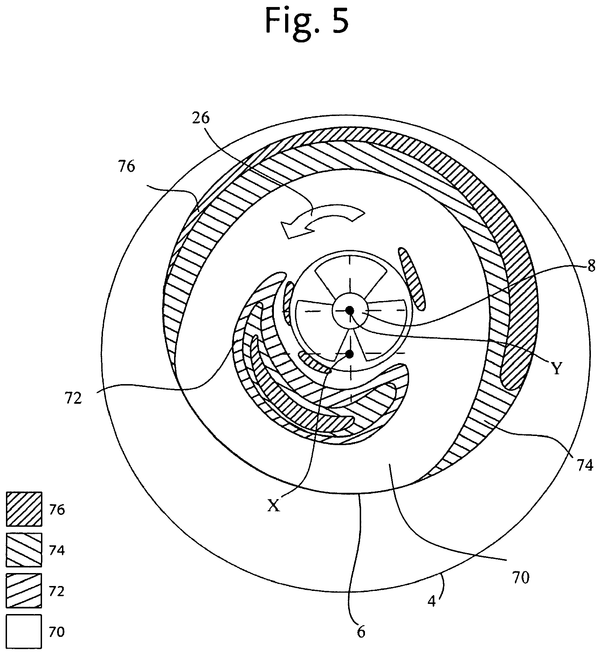

Fig. 5 illustrates a cross-sectional view of a filtration apparatus 2 according to the invention. A membrane filter disc 6 is arranged in a pressure vessel 4 and the membrane filter disc 6 is attached to a shaft 8. The rotation direction 26 of the shaft 8 is indicated as being counter clockwise.

The longitudinal axis X of the pressure vessel 4 is laterally offset from the longitudinal axis Y of the shaft 8. The shear stress on the surface of the membrane filter disc 6 in the areas $A_1$ and $A_4$ generated under rotation at a rotation frequency of 110 revolutions per minute (RPM) as indicated in Fig. 5. The shear stress on the surface of the membrane filter disc 6 is divided into four shear stress areas 70, 72, 74, 76 representing a shear stress of 6-12 Pascal (Pa), 12-14 Pa, 14-16 Pa and 16-18 Pa, respectively.

The highest shear stress area 76 is present at the periphery of the membrane filter disc 6 and at several minor areas at the central part of the membrane filter disc 6. The second largest stress area 74 is present close to the highest shear stress area 76.

Fig. 5 shows that increased shear stress can be generated so that fouling of the membranes can be reduced by laterally offsetting the longitudinal axis X of the pressure vessel 4 from the longitudinal axis Y of the shaft 8.

It is important to underline that increased shear stress also can be achieved by applying another frequency of a rotation of another direction of rotation. The example illustrated in Fig. 5 merely explains the effect of laterally offsetting the longitudinal axis X of the pressure vessel 4 from the longitudinal axis Y of the shaft 8.

A filtration apparatus 2 according to the invention is capable of reducing fouling on the membrane filter discs 6 by generation of high shear. Accordingly, a higher permeate flow can be maintained through the membrane filter discs 6.

### List of reference numerals

| | |
|---|---|
| 2 | - Filtration apparatus |
| 4 | - Pressure vessel |
| 6 | - Membrane filter disc |
| 8 | - Shaft |
| 8' | - Shaft portion |
| 10 | - Interior |
| 12 | - Permeate discharge channel |
| 14, 14' | - Permeate flow |
| 16 | - Sludge flow |
| 18 | - Bearing |
| 20 | - Chassis part |
| 22 | - Sludge inlet |

(continued)

| | |
|---|---|
| 24 | - End flange |
| E | - Eccentricity |
| 26 | - Rotation direction |
| 28 | - Porous aeration pipes |
| X | - Longitudinal axis of the pressure vessel |
| Y | - Longitudinal axis of the shaft |
| 30 | - Membrane filter disc module |
| $D_1, D_2$ | - Distance |
| $D_3$ | - Diameter of the pressure vessel |
| 32 | - Drive unit (motor) |
| 34 | - Connection area |
| 36 | - Hub segments |
| 38 | - Hub member |
| 40 | - Channel |
| 42 | - Channel |
| 44 | - Radial channel |
| 46 | - Bore |
| 50 | - Permeate outlet |
| 52 | - Waste water treatment system |
| 54 | - Waste water inlet |
| 56 | - Biological process tank |
| 58 | - Pump |
| 60 | - Pump |
| 62 | - Pressurized sludge re-circulation inlet |
| 64 | - Excess sludge outlet |
| 66 | - Sludge re-circulation outlet |
| 70 | - First shear stress area |
| 72 | - Second shear stress area |
| 74 | - Third shear stress area |
| 76 | - Fourth shear stress area |
| $A_1$ | - First angular area |
| $A_2$ | - Second angular area |
| $A_3$ | - Third angular area |
| $A_4$ | - Forth angular area |
| L | - Line |
| $P_1$ | - First point |
| $P_2$ | - Second point |

## Claims

1. A filtration apparatus (2), comprising:

    - a pressurisable cylindrical pressure vessel (4) having a cylindrical inner geometry without any obstruction element and having a longitudinal axis (X);
    - a shaft (8) having a longitudinal axis (Y) extending parallel to the longitudinal axis (X) of the pressure vessel (4);
    - a plurality of rotatable membrane filter discs (6) arranged along the length of the shaft (8), where the membrane filter discs (6) are spaced from each other, attached to the shaft (8) and oriented transverse to the longitudinal axis (Y) of the shaft (8), where an interior (10) of the membrane filter discs (6) are in fluid communication with a permeate discharge channel (12) **characterised in that**

the longitudinal axis (X) of the pressure vessel (4) is laterally offset from the longitudinal axis (Y) of the shaft (8) with a distance (E) corresponding to 2-20% of the inner diameter (D3) of the pressure vessel (4), and **in that** the shortest distance, D1 between the membrane filter discs (6) and the inner side of the pressure vessel (4) is less than half the longest distance D2 between the membrane filter discs (6) and the inner side of the pressure vessel (4) so that D1 < ½D2.

2. A filtration apparatus (2) according to claim 1 **characterised in that** the longitudinal axis (X) of the pressure vessel (4) is laterally offset from the longitudinal axis (Y) of the shaft (8) with a distance (E) corresponding to 5-10 % of the inner diameter (D3) of the pressure vessel (4).

3. A filtration apparatus (2) according to claim 1 or claim 2 **characterised in that**:

    - the shaft (8) comprises a plurality of interconnected shaft portions (8');
    - the shaft (8) extends along the length of the pressure vessel (4) and
    - the shaft (8) is mechanically connected to a drive unit.

4. A filtration apparatus (2) according to one of the preceding claims **characterised in that** one or more porous aeration pipes (28), extending basically parallel to the longitudinal axis (X) of the pressure vessel (4), are arranged on the inner side of the pressure vessel (4).

5. A filtration apparatus (2) according to one of the preceding claims **characterised in that** the filtration apparatus (2) comprises a plurality of membrane filter disc modules (30) each consisting of a stack of membrane filter discs (6) and that a bearing (18) is provided at the connection area (34) of each set of adjacent membrane filter disc modules (30).

6. A filtration apparatus (2) according to one of the preceding claims **characterised in that** a plurality of membrane filter discs (6) constitute one or more modules (30) arranged in a chassis part (20) extending along the length of the pressure vessel (4).

7. A filtration apparatus (2) according to one of the preceding claims **characterised in that** the filter discs (6) are arranged in such a way that a line (L) that intersects a first filter disc point (P1) that has the shortest distance, D1, to the inner side of the pressure vessel (4) and that intersects a second filter disc point (P2) that has the longest distance, D2, to the inner side of the pressure vessel (4) defines:

    - a first 180 degree angular area comprising:

        1) a first 90 degree angular area (A1) abutting the first point (P1) and
        2) and a second angular area (A2) abutting first 90 degree angular area (A1) and being present at the same side of the line (L) as first 90 degree angular area (A1),

    - a second 180 degree angular area comprising:

        3) a third 90 degree angular area (A3) abutting the second 90 degree angular area (A2) and being present at the opposite side of the line (L) as the second 90 degree angular area (A2) and
        4) and a fourth degree angular area (A4) extending between the third 90 degree angular area (A3) and the first 90 degree angular area (A1),

    where one or more porous aeration pipes (28) extend in the third 90 degree angular area (A3).

8. A filtration apparatus (2) according to claim 7 **characterised in that** no porous aeration pipes (28) extend in the first 90 degree angular area (A1) or in the second 90 degree angular area (A2).

9. A filtration apparatus (2) according to one of the preceding claims **characterised in that** the pressure vessel (4) is configured to function as a membrane bioreactor (MBR) and that one or more porous aeration pipes (28), extending basically parallel to the longitudinal axis (X) of the pressure vessel (4) arranged on the inner side of the pressure vessel (4) are configured to aerate a fluid contained in the pressure vessel (4).

10. A filtration apparatus (2) according to one of the preceding claims **characterised in that** the porous aeration pipes (28) are configured to release air bubbles in a size range of 2-40 $\mu$m, preferable 5-10 $\mu$m.

11. A filtration apparatus (2) according to anyone of the preceding claims wherein the rotational speed of the shaft (8) is between 100 and 250 RPM, preferably between 140 and 200 RPM.

**Patentansprüche**

1. Filtriervorrichtung (2), die umfasst:

   - ein unter Druck setzbares zylindrisches Druckgefäß (4) mit einer zylindrischen inneren Geometrie ohne irgendein Widerstandselement und mit einer Längsachse (X);
   - eine Welle (8) mit einer Längsachse (Y), die sich parallel zu der Längsachse (X) des Druckgefäßes (4) erstreckt;
   - mehrere drehbare Membranfilterscheiben (6), die entlang der Länge der Welle (8) angeordnet sind, wobei die Membranfilterscheiben (6) voneinander beabstandet angeordnet sind, an der Welle (8) befestigt und quer zu der Längsachse (Y) der Welle (8) orientiert sind, wobei ein Inneres (10) der Membranfilterscheiben (6) in einer Fluidkommunikation mit einem Austrittskanal (12) des Permeats steht, **dadurch gekennzeichnet, dass**:

   die Längsachse (X) des Druckgefäßes (4) von der Längsachse (Y) der Welle (8) mit einem Abstand (E) entsprechend 2-20 % des inneren Durchmessers (D3) des Druckgefäßes (4) seitlich versetzt ist, und dass der kürzeste Abstand D1 zwischen den Membranfilterscheiben (6) und der inneren Seite des Druckgefäßes (4) kleiner als die Hälfte des längsten Abstands D2 zwischen den Membranfilterscheiben (6) und der inneren Seite des Druckgefäßes (4) ist, so dass $D1 < (1/2)D2$ ist.

2. Filtriervorrichtung (2) nach Anspruch 1, **dadurch gekennzeichnet, dass** die Längsachse (X) des Druckgefäßes (4) von der Längsachse (Y) der Welle (8) mit einem Abstand (E) entsprechend 5-10% des inneren Durchmessers (D3) des Druckgefäßes (4) seitlich versetzt ist.

3. Filtriervorrichtung (2) nach Anspruch 1 oder 2, **dadurch gekennzeichnet, dass**:

   - die Welle (8) mehrere miteinander verbundene Wellenabschnitte (8') umfasst;
   - sich die Welle (8) entlang der Länge des Druckgefäßes (4) erstreckt und
   - die Welle (8) mit einer Antriebseinheit verbunden ist.

4. Filtriervorrichtung (2) nach einem der vorhergehenden Ansprüche, **dadurch gekennzeichnet, dass** ein oder mehrere poröse Belüftungsrohre (28), die sich im Wesentlichen parallel zu der Längsachse (X) des Druckgefäßes (4) erstrecken, auf der inneren Seite des Druckgefäßes (4) angeordnet sind.

5. Filtriervorrichtung (2) nach einem der vorhergehenden Ansprüche, **dadurch gekennzeichnet, dass** die Filtriervorrichtung (2) mehrere Module (30) von Membranfilterscheiben umfasst, von denen jedes Modul aus einem Stapel von Membranfilterscheiben (6) besteht und dass ein Träger (18) an der Verbindungsfläche (34) jedes Satzes benachbarter Module (30) von Membranfilterscheiben bereitgestellt ist

6. Filtriervorrichtung (2) nach einem der vorhergehenden Ansprüche, **dadurch gekennzeichnet, dass** mehrere Membranfilterscheiben (6) ein oder mehrere Module (30) festlegen, die in einem Gehäuseteil (20), das sich entlang der Länge des Druckgefäßes (4) erstreckt, angeordnet sind.

7. Filtriervorrichtung (2) nach einem der vorhergehenden Ansprüche, **dadurch gekennzeichnet, dass** die Filterscheiben (6) in solch einer Art angeordnet sind, dass eine Linie (L), die einen ersten Filterscheibenpunkt (P1), der den kürzesten Abstand D1 zu der inneren Seite des Druckgefäßes (4) aufweist, schneidet und die einen zweiten Filterscheibenpunkt (P2), der den längsten Abstand D2 zu der inneren Seite des Druckgefäßes (4) aufweist, schneidet, definiert:

   - einen ersten 180 Grad Winkelbereich, der umfasst:

     1) einen ersten 90 Grad Winkelbereich (A1), der an dem ersten Punkt (P1) anliegt und 2) einen zweiten Winkelbereich (A2), der an dem ersten 90 Grad Winkelbereich (A1) anliegt und an derselben Seite der Linie (L) wie der erste 90 Grad Winkelbereich (A1) vorhanden ist,

   - einen zweiten 180 Grad Winkelbereich, der umfasst:

     3) einen dritten 90 Grad Winkelbereich (A3), der an dem zweiten 90 Grad Winkelbereich (A2) anliegt und an der gegenüberliegenden Seite der Linie (L) wie der zweite 90 Grad Winkelbereich (A2) vorhanden ist, und 4) und einen vierten Winkelgradbereich (A4), der sich zwischen dem dritten 90 Grad Winkelbereich (A3) und dem ersten 90 Grad Winkelbereich (A1) erstreckt,

   wobei sich ein oder mehrere poröse Belüftungsrohre (28) in dem dritten 90 Grad Winkelbereich (A3) erstrecken.

8. Filtriervorrichtung (2) nach Anspruch 7, **dadurch gekennzeichnet, dass** sich in dem ersten 90 Grad Winkelbereich (A1) oder in dem zweiten 90 Grad Winkelbereich (A2) keine porösen Belüftungsrohre (28) erstrecken.

9. Filtriervorrichtung (2) nach einem der vorhergehenden Ansprüche, **dadurch gekennzeichnet, dass** das Druckgefäß (4) konfiguriert ist, um als ein Membranbioreaktor (MBR) zu funktionieren und dass ein oder mehrere poröse Belüftungsrohre (28), die sich im Wesentlichen parallel zu der Längsachse (X) des Druckgefäßes (4) erstrecken, auf der inneren Seite des Druckgefäßes (4) angeordnet sind und dafür konfiguriert sind, ein Fluid, das in dem Druckgefäß (4) enthalten ist, zu belüften.

10. Filtriervorrichtung (2) nach einem der vorhergehenden Ansprüche, **dadurch gekennzeichnet, dass** die porösen Belüftungsrohre (28) dafür konfiguriert sind, Luftblasen in einem Größenbereich von 2-40 μm, vorzugsweise 5-10 μm, freizusetzen.

11. Filtriervorrichtung (2) nach einem der vorhergehenden Ansprüche, wobei die Drehzahl der Welle (8) zwischen 100 und 250 Umdrehungen pro Minute (UpM), vorzugsweise zwischen 140 und 200 UpM liegt.

## Revendications

1. Appareil de filtration (2), comprenant :

- un récipient sous pression (4) cylindrique pouvant être mis sous pression ayant une géométrie intérieure cylindrique sans aucun élément d'obstruction et comportant un axe longitudinal (X) ;
- un arbre (8) comportant un axe longitudinal (Y) s'étendant parallèlement à l'axe longitudinal (X) du récipient sous pression (4);
- une pluralité de disques de filtre (6) à membrane rotatifs disposés le long de la longueur de l'arbre (8), les disques de filtre (6) à membrane étant espacés les uns des autres, fixés à l'arbre (8) et orientés transversalement à l'axe longitudinal (Y) de l'arbre (8), l'intérieur (10) des disques de filtre (6) à membrane étant en communication fluide avec un canal de décharge de perméat (12);

**caractérisé en ce que** :

l'axe longitudinal (X) du récipient sous pression (4) est latéralement décalé de l'axe longitudinal (Y) de l'arbre (8) d'une distance (E) correspondant à 2 à 20% du diamètre intérieur (D3) du récipient sous pression (4), et **en ce que** la distance la plus courte (D1) entre les disques de filtre (6) à membrane et le côté intérieur du récipient sous pression (4) est inférieure à la moitié de la distance la plus longue (D2) entre les disques de filtre (6) à membrane et le côté intérieur du récipient sous pression (4), de telle sorte que D1 < (1/2)*D2.

2. Appareil de filtration (2) selon la revendication 1, **caractérisé en ce que** l'axe longitudinal (X) du récipient sous pression (4) est décalé latéralement de l'axe longitudinal (Y) de l'arbre (8) d'une distance (E) correspondant à 5 à 10% du diamètre intérieur (D3) du récipient sous pression (4).

3. Appareil de filtration (2) selon la revendication 1 ou la revendication 2, **caractérisé en ce que** :

- l'arbre (8) comprend une pluralité de parties d'arbre interconnectées (8') ;
- l'arbre (8) s'étend le long de la longueur du récipient sous pression (4) ; et
- l'arbre (8) est mécaniquement relié à une unité d'entraînement.

4. Appareil de filtration (2) selon l'une des revendications précédentes, **caractérisé en ce qu'**un ou plusieurs tuyaux d'aération poreux (28), s'étendant fondamentalement parallèlement à l'axe longitudinal (X) du récipient sous pression (4), sont disposés sur le côté intérieur du récipient sous pression (4).

5. Appareil de filtration (2) selon l'une des revendications précédentes, **caractérisé en ce que** l'appareil de filtration (2) comprend une pluralité de modules de disque de filtre à membrane (30) constitués chacun par un empilement de disques de filtre (6) à membrane, et **en ce qu'**un palier (18) est disposé dans la zone de liaison (34) de chaque jeu de modules de disque de filtre à membrane adjacents (30).

6. Appareil de filtration (2) selon l'une des revendications précédentes, **caractérisé en ce qu'**une pluralité de disques de filtre (6) à membrane constitue un ou plusieurs modules (30) disposés dans une partie de châssis (20) s'étendant le long de la longueur du récipient sous pression (4).

7. Appareil de filtration (2) selon l'une des revendications précédentes, **caractérisé en ce que** les disques de filtre (6) sont disposés de telle sorte qu'une ligne (L) qui croise un premier point (P1) de disque de filtre qui a la plus courte distance (D1), au côté intérieur du récipient sous pression (4), et qui croise un deuxième point (P2) de disque de filtre qui a la plus longue distance (D2), au côté intérieur du récipient sous pression (4), définisse:

- une première zone angulaire de 180 degrés, comprenant :

1) une première zone angulaire (A1) de 90 degrés butant sur le premier point (P1), et
2) une deuxième zone angulaire (A2) butant sur la première zone angulaire (A1) de 90 degrés, et étant présente du même côté de la ligne (L) que la première zone angulaire (A1) de 90 degrés,

- une deuxième zone angulaire de 180 degrés, comprenant:

3) une troisième zone angulaire (A3) de 90 degrés butant sur la deuxième zone (A2) angulaire de 90 degrés et étant présente du côté opposé de la ligne (L) par rapport à la zone angulaire (A2) de 90 degrés, et
4) une quatrième zone angulaire (A4) s'étendant entre la troisième zone angulaire (A3) de 90 degrés et la première zone angulaire (A1) de 90 degrés,

un ou plusieurs tuyaux d'aération poreux (28) s'étendant dans la troisième zone angulaire (A3) de 90 degrés.

8. Appareil de filtration (2) selon la revendication 7, **caractérisé en ce qu'**aucun tuyaux d'aération poreux (28) ne s'étendent dans la première zone angulaire (A1) de 90 degrés ni dans la deuxième zone angulaire (A2) de 90 degrés.

9. Appareil de filtration (2) selon l'une des revendications précédentes, **caractérisé en ce que** le récipient sous pression (4) est configuré de façon à fonctionner en bioréacteur à membrane (MBR) et **en ce qu'**un ou plusieurs tuyaux d'aération poreux (28), s'étendant fondamentalement parallèlement à l'axe longitudinal (X) du récipient sous pression (4), disposés sur le côté intérieur du récipient sous pression (4), sont configurés de façon à aérer un fluide contenu dans le récipient sous pression (4).

10. Appareil de filtration (2) selon l'une des revendications précédentes, **caractérisé en ce que** les tuyaux d'aération poreux (28) sont configurés de façon à relâcher des bulles d'air dans une plage de taille de 2 à 40 $\mu$m, et, de préférence, de 5 à 10 $\mu$m.

11. Appareil de filtration (2) selon l'une quelconque des revendications précédentes, dans lequel la vitesse de rotation de l'arbre (8) est comprise entre 100 et 250 tours par minute, et, de préférence, entre 140 et 200 tours par minute.

# Fig. 1

# Fig. 2

# Fig. 3

# Fig. 4

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011036767 A1
- EP 1854530 A1
- WO 0180970 A1